# FASCICULE DE BREVET EUROPEEN

(11) **EP 0 898 666 B1**
(45) Date de publication et mention de la délivrance du brevet: **02.05.2003**
(21) Numéro de dépôt: 97924086.8
(22) Date de dépôt: 13.05.1997
(51) Int. Cl.: F16H 1/16, E05F 15/16, F16D 3/68

(54) **MOTOREDUCTEUR NOTAMMENT POUR L'ENTRAINEMENT D'EQUIPEMENTS DE VEHICULES**
GETRIEBEMOTOR, INSBESONDERE ZUM ANTRIEB VON ZUBEHÖRTEILEN IN KRAFTFAHRZEUGEN
REDUCING MOTOR, PARTICULARLY FOR OPERATING VEHICLE FITTINGS

(30) Priorité: 13.05.1996 FR 9605924; 11.03.1997 FR 9702873
(43) Date de publication de la demande: 03.03.1999
(60) Demande divisionnaire: 99118174.4
(73) Titulaire: ArvinMeritor Light Vehicle Systems-France, 45600 Sully-sur-Loire (FR)
(72) Inventeur: QUERE, Jérôme, F-14120 Mondeville (FR); LAURANDEL, Hervé, F-14000 Caen (FR)
(74) Mandataire: Jacobson, Claude
(86) Numéro de dépôt international: FR9700848
(87) Numéro de publication internationale: WO97043564

(56) Documents cités:
- EP-A- 0 272 499
- EP-A- 0 563 583
- DE-A- 2 646 110
- DE-A- 4 224 626
- US-A- 2 162 104
- US-A- 3 396 556
- US-A- 3 455 174
- US-A- 3 930 566
- US-A- 4 090 746
- US-A- 4 108 447
- US-A- 4 425 815
- US-A- 4 650 227
- US-A- 4 790 202
- US-A- 5 095 766
- US-A- 5 169 245
- US-A- 5 212 999
- US-A- 5 245 741
- US-A- 5 410 921

## Description

La présente invention a pour objet un motoréducteur, notamment pour l'entraînement d'équipements de véhicules, du type comprenant un rotor pourvu d'un arbre d'induit, un carter réducteur qui contient une vis sans fin en prise avec une roue dentée, ainsi que des moyens d'étanchéité du carter et un organe de sortie entraîné en rotation , les moyens d'étanchéité comprenant une paroi annulaire de la roue dentée et un joint disposé entre ladite paroi et la paroi du carter, ce joint étant solidarisé soit avec le carter et en appui glissant sur la paroi annulaire, soit avec la paroi annulaire et en appui glissant sur le carter, l'étanchéité étant réalisée entre une lèvre au moins du joint et respectivement ladite paroi annulaire ou la paroi du carter.

Les carters réducteurs des motoréducteurs actuels comprennent les pièces suivantes: roue dentée, moyeu, joint d'étanchéité à lèvre, couvercle et tambour en matière plastique pour l'enroulement d'un câble, par exemple, de lève-vitre ou pignon en acier fritté et moyeu en matière plastique surmoulé.

Cette structure comporte un nombre relativement élevé de pièces, ce qui entraîne un coût de fabrication relativement important.

Par ailleurs, il existe un jeu axial dans la ligne d'arbre montée dans le motoréducteur. Ce jeu axial est dû à l'empilement des dispersions des dimensions des différentes pièces au montage (arbre, butée, carter, culasse, etc.) Ces différentes pièces mises bout-à-bout étant moins longues que leurs logements.

Jusqu'à présent ce jeu axial a été compensé manuellement au moyen d'une vis logé dans l'extrémité du carter en regard du trou d'arbre d'induit, et qui est bloquée par une colle assurant en même temps l'étanchéité. Ce procédé de réglage est long à exécuter, donc onéreux et accroît le coût de fabrication du motoréducteur.

Le brevet US-A-3 455 174 décrit un motoréducteur du type défini dans le préambule de la revendication 1, mais dont la roue dentée est dépourvue d'amortisseur entraînant l'organe de sortie.

Le brevet US-A-5 095 766 décrit un motoréducteur dans lequel la roue dentée contient un amortisseur par l'intermédiaire duquel est entraîné l'organe de sortie.

Le brevet USA 5,169 245 décrit un motoréducteur dans lequel le jeu axial est compensé par un ressort hélicoïdal exerçant sur l'extrémité de l'arbre d'induit une poussée axiale avec interposition d'une pièce qui peut venir en butée sur un épaulement du carter, lorsque le ressort subit une compression déterminée. Dans un tel dispositif, le ressort se comprime sous l'effet de l'effort axial et, lorsque le sens de rotation du motoréducteur est inversé, l'énergie emmagasinée dans le ressort est brusquement libérée. De ce fait, l'extrémité opposée de l'arbre d'induit est violemment plaquée contre le fond du stator, ce qui provoque un bruit très gênant.

Enfin, un autre problème résulte du sertissage d'une bague entre l'arbre du motoréducteur et le stator. En effet, le diamètre intérieur de cette bague varie en raison des irrégularités du diamètre de son logement situé au fond du stator. De ce fait, le jeu radial entre l'arbre et la bague présente des irrégularités, qui entraînent des oscillations gênantes de l'arbre.

L'invention a pour but de réaliser un motoréducteur de structure simplifiée par rapport aux motoréducteurs connus, et qui soit par conséquent, d'un coût de fabrication inférieur.

Conformément à l'invention, le motoréducteur est caractérisé en ce que la roue dentée contient un amortisseur monobloc qui présente des encoches périphériques adaptées pour recevoir d'une part des ailettes radiales de la roue dentée et d'autre part des éléments d'entraînement d'un organe de sortie

Suivant une caractéristique de l'invention, des chanfreins sont agencés sur les bords des encoches.

Suivant une réalisation de l'invention, l'amortisseur est pourvu sur au moins l'une de ses faces de moyens de centrage dans une cavité délimitée entre la roue et l'organe de sortie pour réserver un volume nécessaire au gonflement de l'amortisseur lors de sa compression.

Les chanfreins de l'amortisseur présentent un double avantage: d'une part, ils assurent une progressivité de la déflexion angulaire de l'amortisseur en fonction du couple, et d'autre part, ils facilitent le montage automatique de l'amortisseur sur le moyeu de la roue dentée.

D'autres particularités et avantages de l'invention apparaîtront au cours de la description qui va suivre, faite en référence aux dessins annexés, qui en illustrent plusieurs formes de réalisations à titre d'exemples non limitatifs.

La figure 1 est une vue éclatée partielle, sensiblement à l'échelle d'une forme de réalisation du motoréducteur selon l'invention et plus particulièrement de son carter réducteur.

La figure 1 A est une vue en coupe partielle suivant la ligne 1A-1A de la figure 1 d'un joint d'étanchéité entre la paroi du carter et une collerette de la roue dentée.

La figure 2 est une vue en coupe longitudinale et élévation partielle à échelle agrandie d'une extrémité de l'arbre d'induit et de la paroi de carter, illustrant les moyens de réglage automatique du jeu axial selon l'invention.

La figure 3 est une vue en coupe longitudinale et élévation partielle à échelle agrandie d'un bout de l'arbre d'induit et du stator, illustrant un mode de réalisation d'une bague selon l'invention interposée entre l'arbre et le stator.

La figure 4 est une vue en perspective d'un pignon pouvant constituer l'organe de sortie du motoréducteur.

La figure 5 est une vue en élévation longitudinale et coupe partielle du motoréducteur muni d'un dispositif de compensation automatique du jeu axial de sa ligne d'arbre conforme à l'invention.

La figure 6 est une vue en coupe partielle à échelle agrandie par rapport à la figure 1 d'une forme de réalisation des moyens de réglage du jeu axial entre l'extrémité de l'arbre d'induit et la paroi du carter, le dispositif étant au repos avant mise sous charge.

La figure 7 est une vue en coupe transversale suivant 7/7 de la figure 6.

La figure 8 est une vue analogue à la figure 6, montrant le dispositif de compensation automatique du jeu axial dans sa position sans charge du motoréducteur assemblé pour la ligne.

La figure 9 est une vue analogue à la figure 8 montrant le dispositif dans sa position en fonctionnement du motoréducteur.

La figure 10 est un diagramme illustrant la variation de l'effort axial développé par le carter sur la ligne d'arbre du motoréducteur, en fonction de la compression subie par l'amortisseur de son dispositif de compensation automatique du jeu.

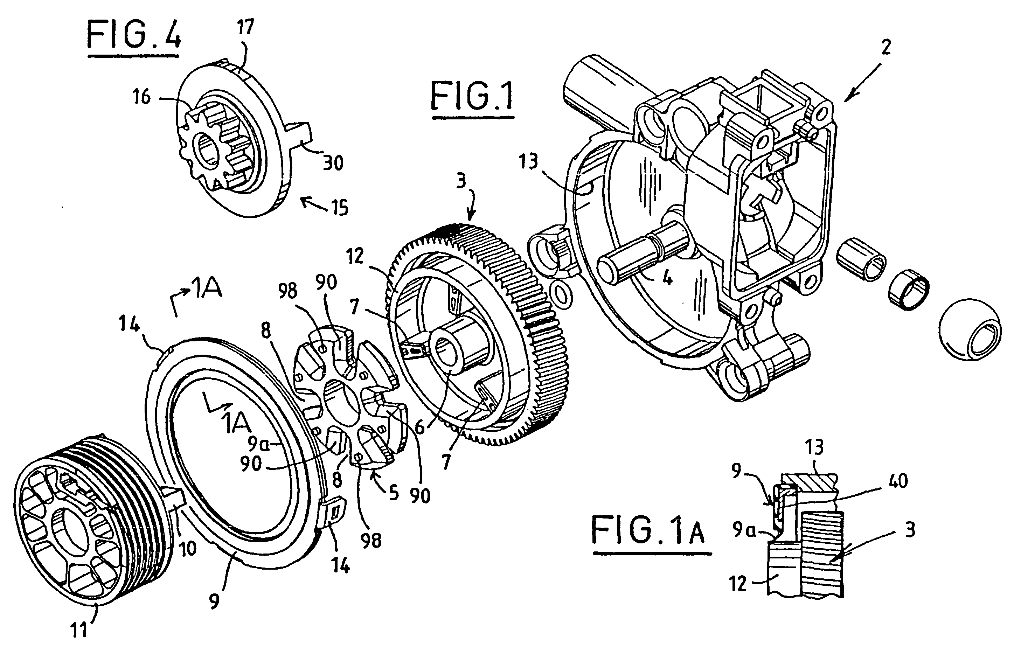

Le motoréducteur représenté aux figures 1 à 4 est destiné notamment à l'entraînement d'équipements de véhicules tels que lève-vitre électriques.

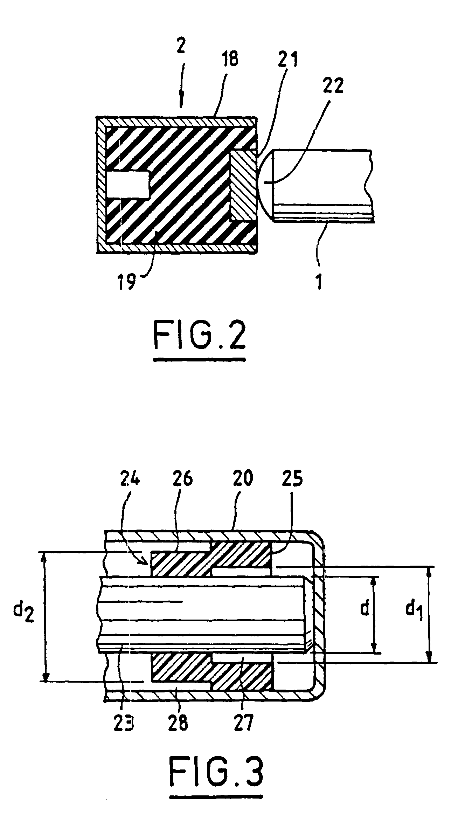

Il comprend un rotor (non représenté) pourvu d'un arbre d'induit dont on voit une extrémité 1 (Figure 2), un carter réducteur 2 qui contient une roue dentée 3 montée sur un axe 4 perpendiculaire à l'arbre d'induit. Ce dernier comporte une vis sans fin (non représentée) avec laquelle la roue 3 est en prise. Le motoréducteur comprend également un amortisseur monobloc 5, logé à l'intérieur de la roue 3 et monté concentriquement au moyeu 6 de celle-ci, qui contient de plus des ailettes radiales 7 venant s'engager dans des encoches radiales correspondantes 8 de l'amortisseur 5 en matière élastique, de préférence élastomère. Des chanfreins 90 sont ménagés sur les bords des encoches 8.

L'amortisseur 5 est pourvu sur au moins l'une de ses faces de moyens de centrage dans une cavité délimitée entre la roue 3 et l'organe de sortie 11. Ces moyens sont dans l'exemple décrit constitués par des tétons 98 venus de moulage avec le reste de l'amortisseur et faisant saillie de ses faces.

Les tétons 98 assurent le centrage précité et réservent le volume nécessaire au gonflement de l'amortisseur 5 lors de sa compression.

Enfin, le carter réducteur 2 comprend un joint d'étanchéité annulaire 9 et un tambour 11 coaxial à l'amortisseur 5 et à la roue 3. Ce tambour est destiné à recevoir un câble notamment pour un lève vitre du type à câble, et constitue l'organe de sortie du motoréducteur. Le joint 9 est réalisé par surmoulage, par exemple sur une rondelle métallique 40 (fig.1A) emmanchée à force dans le carter réducteur 3. Le joint 9 comporte au moins une lèvre 9a en appui glissant sur une paroi annulaire intérieure 12 de la roue dentée 3. La paroi annulaire 12 est nécessitée par le fait que la liaison roue 3-moyeu 6 est à l'extérieur de ce dernier, et non intercalée entre l'axe 4 et la roue 3.

En variante, le joint pourrait être fixé sur la collerette et sa lèvre glisser sur la paroi du carter 3.

La paroi annulaire intérieure 12 fait légèrement saillie longitudinalement par rapport à la denture de la roue 3, en direction du tambour 11. Le joint annulaire 9 d'étanchéité disposé entre la paroi annulaire 12 et la paroi 13 du carter 2, assure ainsi l'étanchéité de ce dernier, sans nécessité d'ajouter un couvercle.

A cet effet, le joint 9 peut être solidarisé soit avec la paroi 13 du carter 2, par exemple au moyen de pattes 14 d'encliquetage élastique dans le carter, et en appui glissant sur la périphérie de la paroi annulaire 12, soit être solidarisé avec cette dernière par tout moyen approprié par exemple par montage serrant dans l'espace situé entre la paroi annulaire12 et la base de la roue dentée 3, en étant alors en appui glissant sur la paroi 13 du carter 2.

Le tambour 11 est pourvu de moyens de solidarisation en rotation avec l'amortisseur 5. Dans le mode ,de réalisation représenté, ces moyens sont constitués par des doigts 10 du tambour 11 venant s'engager dans des encoches radiales correspondantes 8. Les encoches 8 peuvent être par exemple au nombre de six, trois recevant des doigts 10 et trois recevant les ailettes 7. Grâce à cet agencement, le moyeu intermédiaire en matière plastique des motoréducteurs utilisés jusqu'à présent peut être supprimé, l'amortisseur 5 entraînant directement le tambour 11.

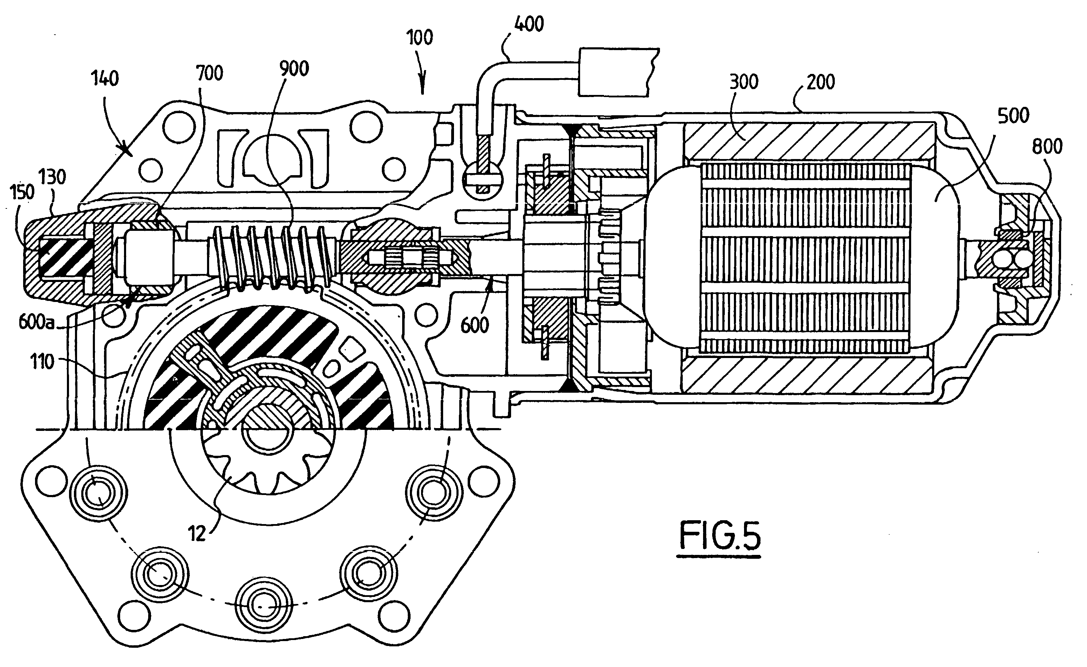

Dans une autre réalisation de l'invention, le motoréducteur comporte un organe de sortie 15 constitué par un pignon 16 réalisé mono-pièce avec un moyeu 17 (Fig.4) intérieur à la paroi annulaire 12 de la roue dentée 3. L'organe de sortie 15 est réalisé de préférence en acier fritté. Le moyeu 17 est équipé de doigts 30 venant s'engager dans des encoches correspondantes 8 et permettant de solidariser l'organe 15 en rotation avec l'amortisseur 5.

Le motoréducteur est également pourvu de moyens de réglage automatique du jeu axial entre l'extrémité 1 de l'arbre d'induit et la paroi 18 du carter 2 (Fig.2). Dans l'exemple représenté, ces moyens de réglage comprennent une butée amortisseuse 19 en un matériau élastique tel que du caoutchouc, remplissant le volume défini à cet endroit par la paroi 18, et une rondelle métallique 21 noyée dans la butée 19. Plus exactement la rondelle 21 est logée dans la face de la butée 19 tournée vers l'arbre 1, de telle façon que la surface de la rondelle 21 affleure la face transversale de la butée 19.

L'extrémité de l'arbre 1 est munie d'une capsule 22 en matière plastique, en appui contre la rondelle 21. L'ensemble constitué par l'arbre d'induit 1, sa capsule terminale 22, la rondelle 21 et l'amortisseur 19 est monté avec une légère précontrainte dans la paroi 18, afin de compenser automatiquement le jeu axial de l'arbre 1.

Suivant une particularité complémentaire du motoréducteur, l'extrémité 23 de l'arbre d'induit opposée à la butée 19 est montée dans une bague de roulement 24 constituée de deux parties étagées radialement 25, 26.

La première partie 25 a un diamètre extérieur égal à celui de la paroi intérieure du stator 20 sur laquelle elle est en appui, tandis que son diamètre intérieur d1 est supérieur au diamètre d de l'arbre 23. La seconde partie 26 possède un diamètre intérieur égal à celui d de l'arbre 23 sur lequel elle est en appui, et un diamètre extérieur d2 inférieur à celui de la paroi intérieure du stator 20.

Ainsi sont délimités un intervalle annulaire 27 entre l'extrémité 23 de l'arbre d'induit et la partie 25, et un autre intervalle annulaire 28 entre la partie 26 et le stator 20.

Cette bague étagée 24 améliore sensiblement la maîtrise du jeu de l'arbre 23, car sur sa partie 26 en contact avec l'arbre 23, le diamètre ne peut varier puisque cette partie 26 est distante de l'intervalle 28 de la paroi intérieure du stator 20. Les irrégularités de celle-ci se transmettent donc uniquement à la partie 25, à laquelle sont transmises les contraintes subies par la partie 26. Ainsi les oscillations de l'arbre 23 sont notablement réduites.

Le motoréducteur 100 illustré à la figure 5 est destiné notamment à l'entraînement d'équipements de véhicules, tels que lève-vitre électriques.

Il comprend, logés à l'intérieur d'un boîtier 200, un stator 300 pouvant être alimenté par des connexions électriques 400 de manière connue, un rotor 500 pourvu d'un arbre d'induit 600 dont les extrémités sont montées dans des paliers 700, 800 de roulement. Cet arbre d'induit porte une vis sans fin 900 en prise avec une roue dentée 110 pouvant entraîner un organe de sortie 120, qui lui-même entraîne l'équipement associé au motoréducteur, par exemple un lève-vitre, un toit ouvrant...

L'extrémité 600a de l'arbre d'induit 600 traversant le palier 700, situé au voisinage de la vis sans fin 900, coopère avec un dispositif 120 de compensation automatique du jeu axial entre l'extrémité 600a et la paroi 130 du carter réducteur 140, afin d'équilibrer les efforts axiaux F développés par l'arbre d'induit 600 pendant le fonctionnement du motoréducteur.

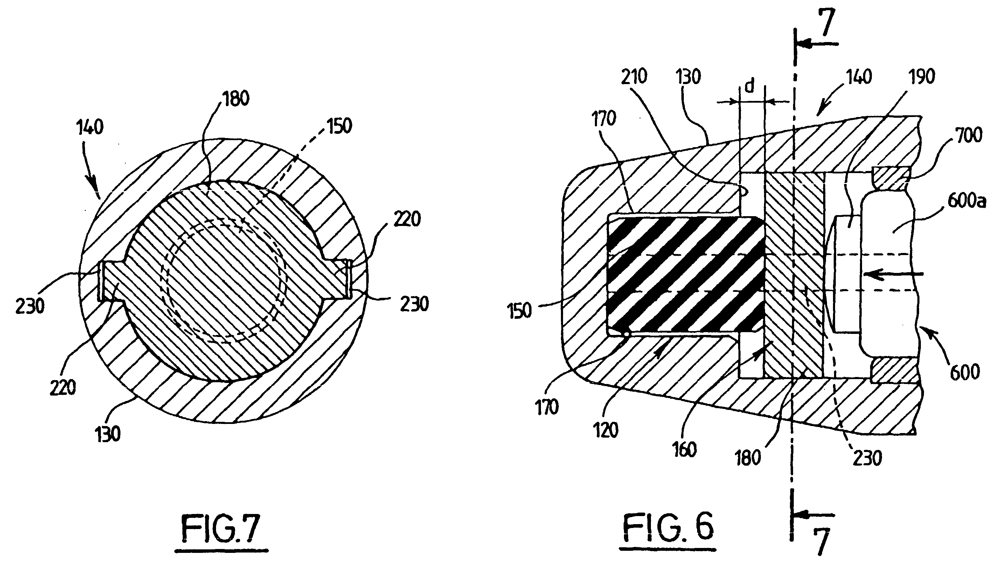

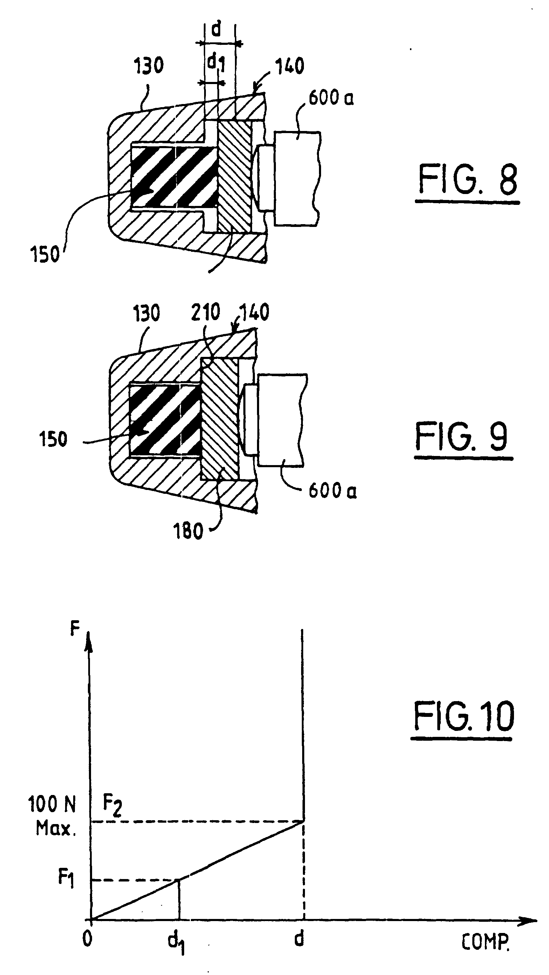

Dans le mode de réalisation représenté, ces moyens de réglage comprennent un amortisseur 150 en un matériau élastique tel qu'un élastomère, disposé avec un jeu annulaire radial (Fig.6) dans un logement terminal 170 de l'extrémité de la paroi 130 du carter 140, et une butée rigide 180 interposée entre l'extrémité 600a de l'arbre 600 et l'amortisseur 150. La butée rigide 180 est de préférence métallique et forme une pastille par exemple cylindrique, en appui contre la face d'extrémité de l'amortisseur 150, constitué par exemple par un cylindre en matériau déformable. La butée 180 est d'autre part en contact avec une capsule terminale 190 fixée à l'extrémité 600a de l'arbre d'induit 600. La butée rigide 180 est déplaçable axialement dans le carter 140 sur une course prédéterminée d correspondant au jeu axial de la ligne d'arbre entre sa position au repos hors charge (Fig.6) et sa position sous charge en fonctionnement du motoréducteur (Fig.9). La course d est limitée par un moyen d'arrêt, constitué dans l'exemple représenté par un épaulement transversal annulaire 210 agencé dans la paroi intérieure du carter 140, en regard de l'amortisseur 150.

La butée rigide 180 est pourvue de moyens antirotation autour de l'axe de l'arbre d'induit 600. Dans le mode de réalisation illustré à la figure 7, ces moyens consistent en deux pattes 220 saillant radialement de la périphérie de la butée 180 et diamétralement opposées, et qui sont engagées dans des crantages correspondants 230 formés dans la paroi intérieure 130 du carter 140. Ces crantages constituent des rainures 230 qui s'étendent longitudinalement jusqu'au plan transversal de l'épaulement 210, afin de permettre le coulissement des pattes 220 dans ces rainures 230 lorsque la butée 180 parcourt la course d.

Le fonctionnement du dispositif de compensation automatique du jeu axial qui vient d'être décrit est le suivant.

Avant assemblage de la ligne d'arbre, la butée 180 est distante du jeu d de l'épaulement 210 (Fig.6). Après assemblage du motoréducteur et sans charge, au repos, la ligne d'arbre 600 est en précompression avec un effort F1 fonction de la cote d1 (figure 8), inférieure à d. Dans cette position, l'amortisseur 150 subit un effort de précompression compris par exemple entre 0 et 100 Newtons, et le jeu ou cote restant d1 résulte de l'empilement des dimensions axiales des pièces constitutives du motoréducteur (arbre 600, butées, carter 140, culasse etc).

La cote ou jeu d1 ainsi que le jeu d sont illustrés sur le diagramme de la figure 10, qui montre que l'effort axial F exercé par l'arbre d'induit 600 sur la butée 180 et sur l'amortisseur 150 croît linéairement de F1 à F2, c'est-à-dire jusqu'à ce que la butée 180 vienne en arrêt contre l'épaulement transversal 210. L'effort maximum F2 subi par la butée 150 à ce moment est par exemple de 100 Newtons.

Dans le cas où le motoréducteur est en fonctionnement, lorsque l'effort axial F sur la ligne d'arbre dépasse la valeur prédéterminée F2, la butée métallique 180 vient donc en contact avec l'épaulement 210, lequel limite l'effort de compression sur l'amortisseur 150 à la valeur précitée.

Cette limitation évite un fluage du matériau élastique de l'amortisseur 150, et par conséquent sa détérioration par des efforts axiaux supérieurs à la valeur F2 atteinte lorsque la butée 180 vient en butée contre l'épaulement 210. Les efforts axiaux développés par l'arbre 600 augmentent alors brutalement (diagramme de la figure 10) et sont reportés directement sur l'épaulement 210 donc sur la paroi 130 du carter 140.

L'invention n'est pas limitée au mode d'exécution représenté et peut comporter diverses variantes. Ainsi par exemple tout moyen antirotation de la butée rigide 180 peut être utilisé, une seule patte ou ergot 220 pouvant éventuellement être mise en oeuvre.

Le dispositif de compensation automatique du jeu axial de la ligne d'arbre selon l'invention est d'une réalisation aisée et par conséquent peu onéreuse, tout en ayant une longue durée de vie grâce à la limitation des efforts de compression sur l'amortisseur 150 qui évite sa détérioration comme précédemment exposé.

En variante, le joint 9 peut comporter plus d'une lèvre, par exemple deux.

## Revendications

1. Motoréducteur notamment pour l'entraînement d'équipements de véhicules, comprenant un rotor pourvu d'un arbre d'induit (1, 23), un carter réducteur (2) qui contient une vis sans fin en prise avec une roue dentée (3), ainsi que des moyens d'étanchéité du carter et un organe de sortie (11 ; 15) entraîné en rotation, les moyens d'étanchéité comprenant une paroi annulaire (12) de la roue dentée (3) et un joint (9) disposé entre ladite paroi annulaire (12) et la paroi (13) du carter, ce joint étant solidarisé soit avec le carter et en appui glissant sur la paroi annulaire, soit avec la paroi annulaire et en appui glissant sur le carter , l'étanchéité étant réalisée entre une lèvre (9a) au moins du joint (9) et respectivement ladite paroi annulaire ou la paroi du carter, **caractérisé en ce que** la roue dentée (3) contient un amortisseur (5) monobloc qui présente des encoches périphériques (8) adaptées pour recevoir d'une part des ailettes radiales (7) de la roue dentée (3) et d'autre part des éléments (10 ; 30) d'entraînement de l'organe de sortie (11 ;15).

2. Motoréducteur selon la revendication 1, **caractérisé en ce que** des chanfreins (90) sont agencés sur les bords des encoches.

3. Motoréducteur selon la revendication 1 ou 2, **caractérisé en ce que** l'amortisseur (5) est pourvu sur au moins l'une de ses faces de moyens de centrage dans une cavité délimitée entre la roue (3) et l'organe de sortie (11 ;5) pour réserver un volume nécessaire au gonflement de l'amortisseur lors de sa compression.

4. Motoréducteur selon la revendication 3, **caractérisé en ce que** lesdits moyens de centrage sont des tétons (98) venus de moulage avec le reste de l'amortisseur (5) et faisant saillie sur au moins l'une des faces latérales de l'amortisseur.

## Patentansprüche

1. Getriebemotor, insbesondere zum Antrieb von Zubehörteilen in Kraftfahrzeugen, enthaltend einen mit einer Ankerwelle (1; 23) versehenen Rotor, ein Getriebegehäuse (2), welches eine Schnecke im Eingriff mit einem Zahnrad (3) beinhaltet, sowie Dichtungsmittel für das Gehäuse und ein drehbar angetriebenes Abtriebsglied (11; 15), wobei die Dichtungsmittel eine ringförmige Wandung (12) des Zahnrades (3) und eine Dichtung (9) zwischen dieser Wandung (12) und der Gehäusewand (13) umfassen, wobei diese Dichtung entweder mit dem Gehäuse fest verbunden und auf der ringförmigen Wandung gleitend angeordnet ist oder fest mit der ringförmigen Wandung verbunden und gleitend auf dem Gehäuse angeordnet ist, und wobei die Dichtigkeit zwischen mindestens einer Dichtungslippe (9a) der Dichtung (9) und jeweils der ringförmigen Wandung oder der Gehäusewand realisiert wird, **dadurch gekennzeichnet, dass** das Zahnrad (3) einen einstückigen Dämpfer (5) enthält, welcher an seinem Umfang mit Nuten (8) so ausgebildet ist, dass diese einerseits radiale Nasen (7) des Zahnrads (3) und andererseits Antriebselemente (10; 30) des Abtriebsgliedes (11; 15) aufnehmen.

2. Getriebemotor nach Anspruch 1, **dadurch gekennzeichnet, dass** die Ränder der Nuten mit Abschrägungen (90) versehen sind.

3. Getriebemotor nach Anspruch 1 oder 2, **dadurch gekennzeichnet, dass** der Dämpfer (5) auf wenigstens einer seiner Seiten mit Zentriermitteln versehen ist, die in einem begrenzten Hohlraum zwischen dem Rad (3) und dem Abtriebsglied (11; 15) ein notwendiges Volumen für das Anschwellen des Dämpfers freihalten, wenn dieser zusammengedrückt wird.

4. Getriebemotor nach Anspruch 3, **dadurch gekennzeichnet, dass** diese Zentriermittel aus Warzen (98) gebildet sind, welche von den Spritzgussresten des Dämpfers (5) stammen und wenigstens auf einer der Seitenflächen des Dämpfers Vorsprünge bilden.

## Claims

1. Gear motor, in particular to drive vehicle equipment. comprising a rotor which is provided with a rotor shaft (1, 23), a reduction gear housing (2) which contains a worm which is engaged with a toothed wheel (3), as well as means for sealing the housing and an output unit (11; 15) which is rotated, the means for sealing comprising an annular wall (12) of the toothed wheel (3) and a seal (9) which is disposed between the said annular wall (12) and the wall (13) of the housing, this seal being rendered integral either with the housing and being supported in a sliding manner on the annular wall, or with the annular wall and being supported in a sliding manner on the housing, the sealing being provided respectively between at least one lip (9a) of the seal (9) and the said annular wall or the wall of the housing, **characterised in that** the toothed wheel (3) contains a shock absorber (5) in a single piece, which has peripheral notches (8) which are designed to receive firstly radial fins (7) of the toothed wheel (3) and secondly drive elements (10; 30) of the output unit (11; 15).

2. Gear motor according to claim 1, **characterised in that** bevels (90) are provided on the edges of the notches.

3. Gear motor according to claim 1 or claim 2, **characterised in that** the shock absorber (5) is provided on at least one of its surfaces with means for centring in a cavity which is delimited between the wheel (3) and the output unit (11; 5) in order to reserve a volume which is necessary for inflation of the shock absorber when it is compressed.

4. Gear motor according to claim 3, **characterised in that** the said means for centring are studs (98) which are moulded integrally with the remainder of the shock absorber (5) and project on at least one of the lateral surfaces of the shock absorber.
